# EUROPEAN PATENT APPLICATION

(11) **EP 2 395 437 A1**
(43) Date of publication of application: **14.12.2011**
(21) Application number: 10290328.3
(22) Date of filing: 14.06.2010
(51) Int. Cl.: G06F 17/28, G10L 15/18, H04H 20/00

(54) **System and method for providing real time translation in a radio**

(71) Applicant: Alcatel Lucent, 75008 Paris (FR)
(72) Inventor: Klein, Johann, 74321 Bietigheim-Biss. (DE)
(74) Representative: Michalski Hüttermann & Partner Patentanwälte

(57) **Abstract**

The invention proposes a System for providing real time translations in a radio. Said system comprises a receiver for receiving radio broadcasts, a selection unit for selecting a source language of the received radio broadcast and /or a target language of the broadcast, and a translation unit for translating said received radio broadcast from said selected source language into said selected target language.

## Description

The present invention relates to radio communication techniques.

In today's society travelling by car is convenient. However, when traveling abroad it often happens that one is receiving a radio program in another language than one is used to.

Suppose the following situation, traveling by car from Düsseldorf to London, it might happen that one is in the reach of German speaking radio stations, travelling on through The Netherlands towards Belgium one is in the reach of Dutch speaking radio stations and later-on in reach of French Speaking radio stations. Once having crossed the English Channel, one is in reach of English speaking radio stations.

If a person is not able to understand all of these languages the person will not understand what is happening. This is particular annoying if one needs to understand information, e.g. security announcements or announcements relating to the travel, e.g. traffic announcements.

In particular in the field of traffic announcements, this issue is a problem since a large number of radio stations are not offering a service like TMC (Traffic Message Channel).

It is thus an object of the invention to overcome one or more problems as can be derived from the above or to provide alternative methods and/or systems to the ones known.

The invention therefore proposes a System for providing real time translations in a radio. Said system comprises a receiver for receiving radio broadcasts, a selection unit for selecting a source language of the received radio broadcast and /or a target language of the broadcast, and a translation unit for translating said received radio broadcast from said selected source language into said selected target language.

In an embodiment of the invention said system further comprises a location detection unit for detecting a location, a determination unit for determining based on the detected location a source language.

In further embodiment of the invention the detection of a location is based on location information received along with said received radio broadcast

In another embodiment of the invention the detection of a location is based on location data determined by a satellite assisted positioning system.

The invention also proposes a method for providing real time translations in a radio. Within said method a source language of the received radio broadcast and /or a target language of the broadcast is selected, and a received radio broadcast is translated from said selected source language into said selected target language.

In an embodiment of the invention the method further comprises detecting a location, and determining based on the detected location a source language.

In still a further embodiment of the invention the detection of a location is based on location information received along with said received radio broadcast

In another embodiment of the invention the detection of a location is based on location data determined by a satellite assisted positioning system.

### Brief Description of the Figures

Some embodiments of apparatus and/or methods in accordance with embodiments of the present invention are now described, by way of example only, and with reference to the accompanying drawings, in which:
Figure 1 shows schematically a flowchart.
Figure 2 shows schematically exemplary units.

In the following the invention will be described with respect to the figures.

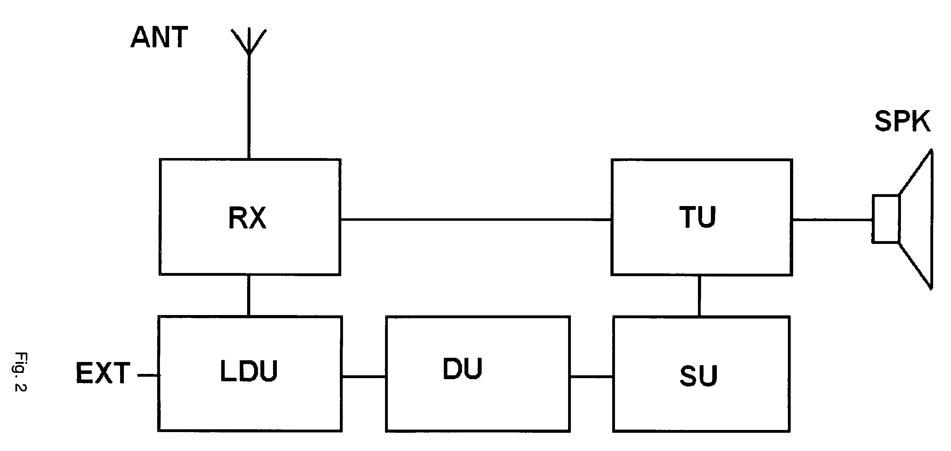

In Fig. 2 a system according to an embodiment of the invention is displayed. There a receiver (RX) for receiving radio broadcasts is connected to some antenna (ANT).

The receiver may be any kind of digital or analog receiver for receiving radio broadcasts.

The system also comprises a translation unit (TU) for translating said received radio broadcast from said selected source language into said selected target language. The translation unit is coupled to an amplifier or directly to a speaker system (SPK).

The translation unit (TU) may be based on any kind of appropriate hardware, software or combination thereof allowing for translation of source language into a target language. The processing may be done on the fly or may produce a somewhat delayed translation depending on the processing constraints.

The system furthermore comprises a selection unit (SU) for selecting a source language of the received radio broadcast and /or a target language of the broadcast.

The selection unit (SU) may offer the possibility to manually select a source language, i.e. the language of the radio broadcast by means of a User interaction.

In an alternative or an addition thereto, the selection unit (SU) may offer an automated detection of the source language. An automated detection of the source language may be based on a detected location.

The selection unit (SU) may also be adapted to remember a previous selection of a source language by means of a memory.

This is of particular value if a radio station is changed automatically.

Furthermore, the selection unit (SU) offers the possibility to manually select a target language, i.e. the language of the radio broadcast by means of a User interaction.

The selection unit (SU) may also be adapted to remember a previous selection of a target language by means of a memory.

This is of particular value if a station is changed automatically.

In an embodiment of the invention said system further comprises a location detection unit (LDU) for detecting a location.

The location detection unit (LDU) may be based on the received radio signal or it may detect the location by means of an external source (EXT).

In case the location detection unit (LDU) is evaluating the received radio signal, the location detection unit is adopted to evaluated particular data provided along with a radio broadcast.

In particular in a Radio Data System (RDS) enabled radio transmission, data is provided which allows for identifying a country of origin of the received radio signal. In RDS the PI code allows for a country code.

Also in digital audio broadcasts like in the Digital Audio Broadcast System (DAB) or Digital Multimedia Broadcast system (DMB) a country code may be embedded.

Hence, the radio broadcast itself provides a means allowing for determining a location.

Alternatively or in addition, the location detection unit (LDU) may detect the location by means of an external source (EXT).

Such an external source (EXT) may be based on positioning data such as those received from a satellite assisted positioning system like GPS or it may be received but another unit adopted to determine a location such as a mobile phone or a road side unit of a Car-to-Infrastructure Communication System.

Furthermore, a determination unit (DU) for determining based on the detected location a source language may be foreseen.

Such a unit may be of particular value if there is more than one language within a country like it is the case e.g. in Switzerland or Belgium. Than a determination unit may either provide a pre-selection based on the detected location to the user, e.g. Italian, French or German in case of a detected location Switzerland, or it may even select a particular language based on detected location. In case of a pre-selection the User will manually select the source language via an appropriate User Interface.

Obviously, the units described above may be part of subsystems or completely integrated into a radio receiver.

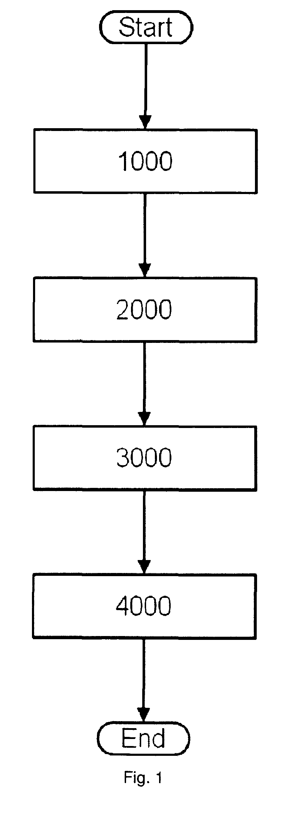

Turning now to Figure 1, an exemplary operation of embodiments according to the invention is described. Although steps are described in a sequential manner, it is clear that variations may be done manually by an interaction with a user or it may be done automatically or it may be based on both approaches.

A receiver (RX) connected to some antenna (ANT) receives a radio broadcast.

In a step 1000, a source language of the received radio broadcast and/or a target language of the radio broadcast is selected.

The selection (1000) of a source language may be done manually, i.e. the language of the radio broadcast is selected by means of a User interaction.

In an alternative or an addition thereto, the selection (1000) of a source language may be automated based on a detection of the source language. An automated detection (2000) of the source language may be based on a detected location.

The selection (1000) may encompass setting a previous selection of a source language as a default.

This is of particular value if a radio station is changed automatically.

Furthermore, the selection (1000) may offer the possibility to manually select a target language, i.e. the language of the radio broadcast by means of a User interaction.

The selection (1000) may encompass setting a previous selection of a target language as a default.

This is of particular value if a station is changed automatically.

Once source and target language are selected a received radio broadcast is translated (4000) from said selected source language into said selected target language. The result of the translation (4000) is provided to an amplifier or directly to a speaker system (SPK).

The translation (4000) may be based on any kind of appropriate hardware, software or combination thereof allowing for translation of source language into a target language. The processing may be done on the fly or may produce a somewhat delayed translation depending on the processing constraints.

In an embodiment of the invention detecting (2000) of a location may be envisaged.

Such detection (2000) may be based on the received radio signal or it may comprise detecting the location by means of an external source (EXT).

In case detecting (2000) is based on the received radio signal, detecting (2000) comprises evaluating the received radio signal, in particular data provided along with a radio broadcast.

In particular in a Radio Data System (RDS) enabled radio transmission, data is provided which allows for identifying a country of origin of the received radio signal. In RDS the Program Identification (PI) code allows for a country code. RDS is used as well as a synonym for the Radio Broadcast Data System (RBDS) used e.g. in North America.

Also in digital audio broadcasts like in the Digital Audio Broadcast System (DAB) or Digital Multimedia Broadcast system (DMB) a country code may be embedded.

Hence, the radio broadcast itself provides a means allowing for determining a location.

Alternatively or in addition, the detection (2000) may comprise detecting the location by means of an external source (EXT).

Such an external source (EXT) may be based on positioning data such as those received from a satellite assisted positioning system like GPS or it may be received but another unit adopted to determine a location such as a mobile phone or a road side unit of a Car-to-Infrastructure Communication System.

In a further embodiment, it is also envisaged that upon detecting a location (2000) a determination (3000) may be performed for determining based on the detected location a source language.

Such a determination (3000) may be of particular value if there is more than one language within a country like it is the case e.g. in Switzerland or Belgium. Than a determination (3000) may either provide a pre-selection based on the detected location to the user, e.g. Italian, French or German in case of a detected location Switzerland, or it may even select a particular language based on detected location. In case of a pre-selection the User will manually select the source language via an appropriate User Interface.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

The present invention may be embodied in other specific apparatus and/or methods. The described embodiments are to be considered in all respects as only illustrative and not restrictive.

It should be appreciated by those skilled in the art that any block diagrams herein represent conceptual views of illustrative circuitry embodying the principles of the invention.

In particular, the scope of the invention is indicated by the appended claims rather than by the description and figures herein. All changes that come within the meaning and range of equivalency of the claims are to be embraced within their scope.

## Claims

1. System for providing real time translations in a radio, comprising 45
• a receiver for receiving radio broadcasts,
• a selection unit for selecting a source language of the received radio broadcast and /or a target language of the radio broadcast, and
• a translation unit for translating said received radio broadcast from said selected source language into said selected target language.

2. System according to claim 1, further comprising a location detection unit for detecting a location, a determination unit for determining based on the detected location a source language.

3. System according to claim 2, wherein the detection of a location is based on location information received along with said received radio broadcast

4. System according to claim 2 or 3, wherein the detection of a location is based on location data determined by a satellite assisted positioning system.

5. Method for providing real time translations in a radio, comprising the steps of
• selecting (1000) a source language of the received radio broadcast and /or a target language of the radio broadcast, and
• translating (4000) a received radio broadcast from said selected source language into said selected target language.

6. Method according to claim 5, further comprising
• detecting (2000) a location, and
• determining (3000) based on the detected location a source language.

7. Method according to claim 6, wherein the detection of a location is based on location information received along with said received radio broadcast

8. Method according to claim 6 or 7, wherein the detection of a location is based on location data determined by a satellite assisted positioning system.

## Amended claims

### Amended claims in accordance with Rule 137(2) EPC.

**1.** System for providing real time translations in a radio, comprising
• a receiver for receiving radio broadcasts,
• a selection unit for selecting a source language of the received radio broadcast and /or a target language of the radio broadcast,
• a translation unit for translating said received radio broadcast from said selected source language into said selected target language,
• a location detection unit for detecting a location, wherein the location is determined by means of an external source (EXT) such as a mobile phone or a road side unit of a Car-to-Infrastructure Communication System, and
• a determination unit for determining based on the detected location a source language.

**2.** System according to claim 1, wherein the selection unit (SU) allows for manually selecting a target language

**3.** System according to claim 1 or 2, wherein the selection unit is adapted to remember a previous selection of a target language by means of a memory.

**4.** System according to claim 1, 2 or 3, wherein the determination unit provides a preselection of a source language based on the detected language

**5.** Method for providing real time translations in a radio, comprising the steps of
• selecting (1000) a source language of the received radio broadcast and /or a target language of the radio broadcast,
• translating (4000) a received radio broadcast from said selected source language into said selected target language,
• detecting (2000) a location, wherein the location is determined by means of an external source (EXT) such as a mobile phone or a road side unit of a Car-to-Infrastructure Communication System, and
• determining (3000) based on the detected location a source language.

**6.** Method according to claim 5, further comprising the step of selecting a target language

**7.** Method according to claim 5 or 6, wherein the determination provides a preselection of a source language based on the detected language.
